# EUROPEAN PATENT APPLICATION

(11) **EP 4 235 920 A1**
(43) Date of publication of application: **30.08.2023**
(21) Application number: 22876765.3
(22) Date of filing: 23.09.2022
(51) Int. Cl.: H01M 50/19, H01M 50/184, H01M 50/186, H01M 50/178, A62C 3/16

(54) **LEAD FILM FOR SECONDARY BATTERY, AND SECONDARY BATTERY COMPRISING SAME**

(30) Priority: 01.10.2021 KR 20210131223
(71) Applicant: LG Energy Solution, Ltd., Seoul 07335 (KR)
(72) Inventor: KANG, Gyung-Soo, Daejeon 34122 (KR); KIM, Mi-Na, Daejeon 34122 (KR); GIL, Gi-Moon, Daejeon 34122 (KR)
(74) Representative: Plasseraud IP
(86) International application number: PCT/KR2022/014296
(87) International publication number: WO 2023/054993

(57) **Abstract**

The present disclosure relates to a lead film for a secondary battery including a fire extinguishing agent in which the sealing property of a battery may be maintained and safety may be improved, and a secondary battery including the lead film. A lead film for a secondary battery according to the present disclosure includes a fire extinguishing agent. According to the present disclosure, because the first extinguishing agent is included in a lead film adjacent to an electrode lead with a large amount of heat, the fire extinguishing agent may quickly operate when a temperature of a battery rises.

## Description

### TECHNICAL FIELD

The present disclosure relates to a lead film for a secondary battery and a secondary battery including the lead film. The present application claims priority to Korean Patent Application No. 10-2021-0131223 filed on October 1, 2021 in the Republic of Korea, the disclosures of which are incorporated herein by reference.

### BACKGROUND ART

Mobile IT devices such as a mobile phone, a laptop computer, and a table PC are closely related to modern life, and the demand for a secondary battery that is an essential component has quickly increased with the growth of the IT industry market. A secondary battery is an eco-friendly battery that may be repeatedly used through charging and discharging and does not use harmful materials such as lead, nickel, and cadmium. A secondary battery is core technology of the new growth engine industry because of its high energy density for storing a lot of energy in a small volume while being lightweight. In particular, lithium secondary batteries are most widely used as power sources for mobile IT devices that are closely related to human life, and recently, the use of lithium secondary batteries as power sources for electric vehicles and power storage devices for renewable energy has continuously increased.

In general, a secondary battery includes a positive electrode, a negative electrode, a separator for separating the positive electrode from the negative electrode, an electrolyte for transferring lithium ions through the separator, a case in which the positive electrode, the negative electrode, the separator, and the electrolyte are accommodated, and electrode leads functioning as paths through which current flows to the outside of the case. In general, a lead film is attached to an electrode lead, to prevent a short from occurring in the electrode and to seal the electrode lead and a case.

In such a secondary battery, a fire may start from the battery due to various causes such as a short circuit inside the secondary battery, over-charging or over-discharging, and temperature control. In this case, a temperature inside the secondary battery may quickly rise and at the same time, thermal runaway (thermal propagation) in which heat is transferred to adjacent cells may occur, thereby further increasing the fire.

### DISCLOSURE

### Technical Problem

The present disclosure is designed to solve the problems of the related art, and therefore the present disclosure is directed to providing a lead film for a secondary battery in which fire damage when a battery is overheated may be minimized, and a secondary battery including the lead film.

### Technical Solution

To solve the problems, a lead film for a secondary battery according to the present disclosure includes a fire extinguishing agent.

In one aspect of the present disclosure, there is provided a lead film for a secondary battery, including an inner space and a fire extinguishing agent in the inner space.

The inner space may be enclosed in the lead film.

In another aspect of the present disclosure, a recess portion that is recessed inward may be formed in the lead film, and wherein the fire extinguishing agent is provided in the recess portion.

The recess portion may be exposed toward a surface of the lead film.

The recess portion may have a rectangular shape.

Except for a portion including the fire extinguishing agent, continuity of the lead film may be maintained in a longitudinal direction, a width direction, and a thickness direction.

The fire extinguishing agent may be solid, liquid, or gaseous.

The fire extinguishing agent may include carbonate, hydrogen carbonate, protein foam, fluoroprotein foam, alcohol resistant foam, aqueous film forming foam, synthetic surfactant foam, urea, halogen compound, phosphate compound, phosphazene compound, silicate, ammonium salt, ethyl methyl imidazole, fluoroethers, fluoroketones, fluorocarbons or a combination thereof.

In another aspect of the present disclosure, there is provided a secondary battery including an electrode assembly to which an electrode lead is attached, a case in which the electrode assembly is accommodated, a sealing portion configured to seal the electrode assembly in the case, and a lead film surrounding a part of an outer surface of the electrode lead and located between the electrode lead and the sealing portion of the case, wherein the lead film includes a fire extinguishing agent.

In a configuration of the secondary battery according to the present disclosure, the lead film may include an inner space, wherein the fire extinguishing agent is included in the inner space.

The inner space may be enclosed in the lead film.

The inner space may be located at a distance from an edge of the lead film and an edge of the electrode lead.

In another configuration of the secondary battery according to the present disclosure, a recess portion that is recessed inward may be formed in the lead film, wherein the fire extinguishing agent is provided in the recess portion.

The recess portion may be recessed toward the electrode lead, wherein the recess portion is exposed toward the sealing portion.

The recess portion may be recessed toward the sealing portion, wherein the recess portion is exposed toward the electrode lead.

The recess portion may be located at a distance from an edge of the lead film and an edge of the electrode lead.

The recess portion may have a rectangular shape.

In still another configuration of the secondary battery according to the present disclosure, the lead film may include a first portion corresponding to the sealing portion and a second portion not corresponding to the sealing portion, wherein the fire extinguishing agent is included in the first portion.

The first portion may include a third portion corresponding to the electrode lead and a fourth portion not corresponding to the electrode lead, wherein the fire extinguishing agent is included in the third portion.

The secondary battery may be a pouch-type secondary battery.

### Advantageous Effects

Because a lead film for a secondary battery according to the present disclosure includes a fire extinguishing agent, the safety of the battery may be improved.

In a lead film for a secondary battery according to an aspect of the present disclosure, because a fire extinguishing agent is included in a lead film adjacent to an electrode lead with a large amount of heat, the fire extinguishing agent may quickly operate when a temperature of a battery rises.

In a lead film for a secondary battery according to another aspect of the present disclosure, because venting occurs at an interface between a surface of a lead film toward which a recess portion is open and a sealing portion of a case, and a fire extinguishing agent sealed by the sealing portion is ejected by the venting, the fire extinguishing agent may quickly operate.

In a lead film for a secondary battery according to another aspect of the present disclosure, because a fire extinguishing agent may be applied to an electrode lead with a large amount of heat, fire damage may be minimized when a battery is overheated.

Although a lead film for a secondary battery according to the present disclosure includes a fire extinguishing agent, the sealing property of a battery may be maintained.

In a lead film for a secondary battery according to an aspect of the present disclosure, although a fire extinguishing agent is included in the lead film, sufficient pressure resistance which is similar to that of a conventional lead film may be obtained. Accordingly, even when the fire extinguishing agent is included, the sealing property of a battery may be maintained.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view illustrating a lead film for a secondary battery, according to an embodiment of the present disclosure.
FIG. 2 is a cross-sectional view taken along line II-II' of FIG. 1.
FIG. 3 is a plan view illustrating a lead film for a secondary battery, according to another embodiment of the present disclosure.
FIG. 4 is a cross-sectional view taken along line IV-IV' of FIG. 3.
FIG. 5 is a view illustrating a secondary battery, according to an embodiment of the present disclosure.
FIG. 6 is a cross-sectional view taken along line A-A' of FIG. 5, according to an embodiment of the present disclosure.
FIG. 7 is a cross-sectional view taken along line A-A' of FIG. 5, according to another embodiment of the present disclosure.
FIG. 8 is a view illustrating a secondary battery, according to another embodiment of the present disclosure.
FIG. 9 is a cross-sectional view taken along line B-B' of FIG. 8.
FIG. 10 is a view illustrating a secondary battery, according to another embodiment of the present disclosure.
FIG. 11 is a cross-sectional view taken along line C-C' of FIG. 10.
FIG. 12 is an enlarged view illustrating an electrode lead and a lead film in a secondary battery, according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

A lead film according to an aspect of the present disclosure includes a fire extinguishing agent.

The fire extinguishing agent extinguishes or cools a battery when the battery is overheated. When the battery is at high temperature or high pressure due to an abnormal operation, the fire extinguishing agent is ejected from the lead film to extinguish or cool the battery.

The fire extinguishing agent may be any type of fire extinguishing agent commonly used for fire suppression without limitation, and oxygen dilution extinguishing, cooling extinguishing, or extinguishing using both of these principles may be applied.

In an embodiment of the present disclosure, the fire extinguishing agent may be solid, liquid, or gaseous.

In an embodiment of the present disclosure, the fire extinguishing agent may include carbonate, hydrogen carbonate, protein foam, fluoroprotein foam, alcohol resistant foam, aqueous film forming foam, synthetic surfactant foam, urea, halogen compound, phosphate compound, phosphazene compound, silicate, ammonium salt, ethyl methyl imidazole, fluoroethers, fluoroketones, fluorocarbons or a combination thereof.

The carbonate or the hydrogen carbonate may extinguish fire through oxygen dilution by reacting with acid and generating carbon dioxide. The protein foam, the fluoroprotein foam, the alcohol resistant foam, the aqueous film forming foam, the synthetic surfactant foam, etc. may extinguish fire by the heat of vaporization and oxygen absorption function. The urea may extinguish fire through oxygen dilution and cooling by generating carbon dioxide and ammonia by using water and heat. The ammonium salt may extinguish fire through cooling by generating ammonia by using heat. The halogen compound may be an evaporative liquefied fire extinguishing material.

In another embodiment of the present disclosure, the fire extinguishing agent may include calcium carbonate (CaCO₃), potassium carbonate aqueous solution, fluorinated surfactant, sodium silicate, anhydrous sodium carbonate, sodium bicarbonate, potassium bicarbonate, sodium phosphate, aluminum sulfate, ammonium chloride, ammonium nitrate, ammonium bicarbonate, ammonium sulfate, ammonium dihydrogen phosphate, burnt alum and/or halon 1211.

In another embodiment of the present disclosure, the fire extinguishing agent may include sodium bicarbonate (NaHCO₃), known as first type extinguishing powder, which is moisture-proof processed with zinc stearate or magnesium and is colored in white, potassium bicarbonate (KHCO₃), known as second type extinguishing powder, which is moisture-proof processed with zinc stearate or magnesium and is colored in purple, ammonium phosphate (NH₄H₂PO₄), known as third type extinguishing powder, which is moisture-proof processed with silicone oil and is colored in pink, powder, known as fourth type extinguishing powder, in which urea and potassium carbonate are combined or a combination thereof.

In another embodiment of the present disclosure, the fire extinguishing agent may include a high boiling point liquid extinguishing agent having a boiling point of 120°C to 400°C at atmospheric pressure or a low boiling point liquid extinguishing agent having a boiling point of 70°C to 120°C at atmospheric pressure.

The high boiling point liquid extinguishing agent may include a phosphate compound, a phosphazene compound with a P=N bond, ethyl methyl imidazole, and the like.

The phosphate compound may be, for example, trimethyl phosphate, triethyl phosphate, tris(chloroethyl) phosphate, or tris(dichloropropyl) phosphate.

The low boiling point liquid extinguishing agent may include fluoroethers, fluoroketones, fluorocarbons, and the like.

The fluorocarbones may include perfluorobutyl tetrahydrofuran, perfluorotributylamine, perfluorotripropylamine, perfluoromethyldecalin, perfluorodecalin, and the like.

In a lead film for a secondary battery according to an embodiment of the present disclosure, because a fire extinguishing agent is included in a lead film adjacent to an electrode lead with a large amount of heat, the fire extinguishing agent may quickly operate when a temperature of a battery rises. In a secondary battery including a lead film for a secondary battery according to the present disclosure, even when a fire occurs, the fire may be quickly extinguished by discharging a fire extinguishing agent. Accordingly, thermal runaway (thermal propagation) in which a temperature in the secondary battery quickly rises and heat is transferred to adjacent cells may be prevented and a bigger fire may be avoided.

Because a lead film for a secondary battery serves to seal an electrode lead and a case, sufficient mechanical rigidity should be ensured.

In a lead film for a secondary battery according to an embodiment of the present disclosure, although a fire extinguishing agent is included in the lead film, sufficient pressure resistance which is similar to that of a conventional lead film may be obtained. Accordingly, even when the fire extinguishing agent is included, the sealing property of a battery may be maintained.

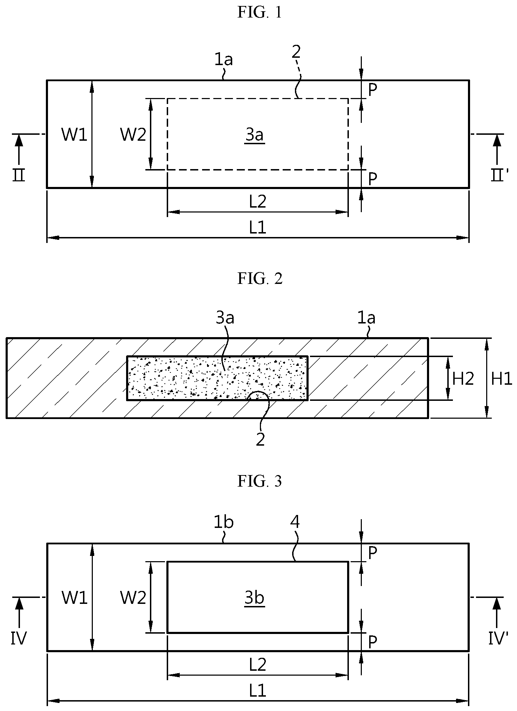

FIG. 1 is a plan view illustrating a lead film for a secondary battery, according to an embodiment of the present disclosure. FIG. 2 is a cross-sectional view taken along line II-II' of FIG. 1.

Referring to FIGS. 1 and 2, a lead film 1a for a secondary battery according to an embodiment of the present disclosure may include an inner space 2, and may include a fire extinguishing agent 3a in the inner space 2.

The lead film 1a may be a rectangular sheet member in which a length L1 is greater than a width W1 and a thickness H1. FIG. 2 is a cross-sectional view taken in a longitudinal direction of the lead film 1a of FIG. 1. A thickness of the lead film refers to a maximum value of a distance between both surfaces of the lead film.

In an embodiment of the present disclosure, the inner space 2 may be enclosed in the lead film 1a as shown in FIG. 2. When the inner space 2 is enclosed in the lead film 1a, the fire extinguishing agent 3a is buried in the lead film 1a. That is, the continuity of the lead film 1a except for a portion including the fire extinguishing agent 3a is maintained. The elements are arranged in the order of the lead film 1a - the fire extinguishing agent 3a - the lead film 1a in the longitudinal direction of the lead film 1a. The elements are also arranged in the order of the lead film 1a - the fire extinguishing agent 3a - the lead film 1a in a thickness direction of the lead film 1a. The elements are also arranged in the order of the lead film 1a - the fire extinguishing agent 3a - the lead film 1a in a width direction of the lead film 1a. The continuity of the lead film 1a except for the portion including the fire extinguishing agent 3a is maintained in the longitudinal direction, the width direction, and the thickness direction.

Accordingly, because the fire extinguishing agent 3a may not be exposed to an electrolyte, and a sufficient contact area between an electrode lead and a front surface or a rear surface of the lead film 1a may be secured, the airtightness and durability of a battery may be easily ensured. Assuming that the inner space 2 is enclosed in the lead film 1a, when the lead film 1a melts due to an abnormal operation of the battery, the fire extinguishing agent 3a may be ejected from the lead film 1a.

In an embodiment of the present disclosure, although the inner space 2 may have a rectangular shape in a plan view and a cross-sectional view in which a length L2 is less than the length L1 of the lead film 1a, a thickness H2 is less than the thickness H1 of the lead film 1a, and a width W2 is less than the width W1 of the lead film 1a as shown in FIGS. 1 and 2, the inner space 2 may have any shape as long as it may include the fire extinguishing agent 3a.

For example, the thickness H1 of the lead film 1a for a secondary battery may be 0.2 mm, and the inner space 2 may have the thickness H2 of 0.15 mm. Also, the inner space 2 may be located at a distance P of 2 mm from an edge in the longitudinal direction of the lead film 1a for a secondary battery. As such, even when the fire extinguishing agent 3a is included in the inner space 2, the sealing property of the lead film 1a may be maintained. Also, even when the lead film 1a includes the fire extinguishing agent 3a therein, the thickness H1 of the lead film 1a is constant in the longitudinal direction thereof. Because the inner space 2 is provided inside the lead film 1a and the fire extinguishing agent 3a is buried in the inner space 2, the thickness H1 may be constant. Because there is no thickness change in the lead film 1a, an existing sealing process may be used, and because there is no process change due to the lead film 1a in a secondary battery manufacturing process, process management may be effectively performed.

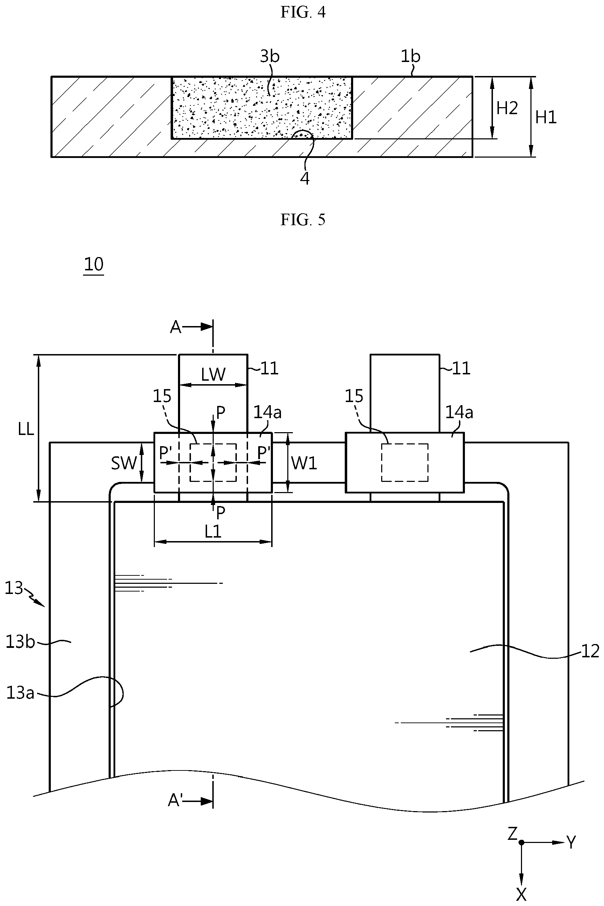

FIG. 3 is a plan view illustrating a lead film for a secondary battery, according to another embodiment of the present disclosure. FIG. 4 is a cross-sectional view taken along line IV-IV' of FIG. 3.

Referring to FIGS. 3 and 4, a lead film 1b for a secondary battery according to another embodiment of the present disclosure may include a recess portion 4 that is recessed inward, and the recess portion 4 may include a fire extinguishing agent 3b.

Like the lead film 1a described with reference to FIGS. 1 and 2, the lead film 1b may be a rectangular sheet member in which the length L1 is greater than the width W1 and the thickness H1. FIG. 4 is a cross-sectional view taken in a longitudinal direction of the lead film 1b of FIG. 3.

In an embodiment of the present disclosure, the recess portion 4 may be exposed toward a surface of the lead film 1b as shown in FIGS. 3 and 4. The continuity of the lead film 1b except for a portion including the fire extinguishing agent 3a is maintained. The elements are arranged in the order of the lead film 1b - the fire extinguishing agent 3b - the lead film 1b in the longitudinal direction of the lead film 1b. The elements are arranged in the order of the lead film 1b - the fire extinguishing agent 3b in a thickness direction of the lead film 1b. The elements are arranged in the order of the lead film 1b - the fire extinguishing agent 3b - the lead film 1b in a width direction of the lead film 1b.

In an embodiment of the present disclosure, as shown in FIGS. 3 and 4, although the recess portion 4 may have a rectangular shape in a plan view and a cross-sectional view in which the length L2 is less than the length L1 of the lead film 1b, the thickness H2 is less than the thickness H1 of the lead film 1b, and the width W2 is less than the width W1 of the lead film 1b, the recess portion 4 may have any shape as long as it may include the fire extinguishing agent 3b.

For example, the thickness H1 of the lead film 1b for a secondary battery may be 0.2 mm, and the recess portion 4 may have the thickness H2 of 0.15 mm. Also, the recess portion 4 may be located at the distance P of 2 mm from an edge in the longitudinal direction of the lead film 1b for a secondary battery. When compared to a case where the recess portion 4 is not included, a contact area between the lead film 1b and an electrode lead is reduced by the area of the recess portion 4, but the sealing property may be maintained at the same level as in the related art by adjusting a size and a position of the recess portion 4 as described above.

In an embodiment of the present disclosure, any of the lead films 1a, 1b for a secondary battery may include polyethylene, polypropylene, polyimide or a combination thereof, and may include materials that are widely used as a lead film for a secondary battery. Because any of the lead films 1a, 1b formed of the material has excellent sealing property, the airtightness of a battery may be maintained and leakage of an internal electrolyte may be prevented.

A secondary battery may be manufactured by locating a lead film for a secondary battery between an electrode lead and a case.

A secondary battery according to an embodiment of the present disclosure includes: an electrode assembly to which an electrode lead is attached; a case in which the electrode assembly is accommodated; a sealing portion for sealing the electrode assembly in the case; and a lead film surrounding a part of an outer surface of the electrode lead and located between the electrode lead and the case, wherein the lead film includes a fire extinguishing agent.

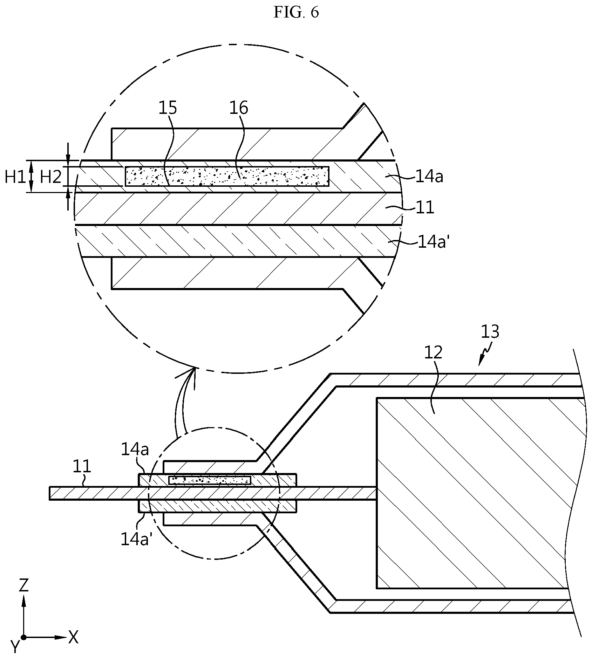

FIG. 5 is a view illustrating a secondary battery, according to an embodiment of the present disclosure. FIG. 6 is a cross-sectional view taken along line A-A' of FIG. 5.

Referring to FIGS. 5 and 6, a secondary battery 10 according to an embodiment of the present disclosure includes an electrode assembly 12 to which an electrode lead 11 is attached, and a case 13.

The electrode lead 11 that is a terminal exposed to the outside and connected to an external device may be formed of a conductive material. The electrode lead 11 may include a positive electrode lead and a negative electrode lead. The positive electrode lead and the negative electrode lead may be located in opposite directions in a longitudinal direction of the battery (X direction), or the positive electrode lead and the negative electrode lead may be located in the same direction in the longitudinal direction of the battery.

The electrode assembly 12 includes a positive electrode plate, a negative electrode plate, and a separator. In the electrode assembly 12, the positive electrode plate and the negative electrode plate may be sequentially stacked with the separator therebetween.

The positive electrode plate may include a positive electrode current collector formed of a metal thin film having excellent conductivity, for example, aluminum (Al) foil, and a positive electrode active material layer coated on at least one surface thereof. Also, the positive electrode plate may include a positive electrode lead formed of a metal material, for example, an Al material at an end thereof. The positive electrode lead may protrude from the end of the positive electrode plate, may be welded to the end of the positive electrode plate, or may be adhered to the end of the positive electrode plate by using a conductive adhesive.

The negative electrode plate may include a negative electrode current collector formed of a conductive metal thin film, for example, copper (Cu) foil, and a negative electrode active material layer coated on at least one surface thereof. Also, the negative electrode plate may include a negative electrode lead formed of a metal material, for example, a nickel (Ni) material, at an end thereof. The negative electrode lead may protrude from the end of the negative electrode plate, may be welded to the end of the negative electrode plate, or may be adhered to the end of the negative electrode plate by using a conductive adhesive.

The separator may be located between the positive electrode plate and the negative electrode plate to electrically insulate the positive electrode plate from the negative electrode plate, and may be formed as a porous film so that lithium ions or the like pass between the positive electrode plate and the negative electrode plate. The separator may include a porous film using, for example, polyethylene (PE), polypropylene (PP), or a composite film thereof.

An inorganic coating layer may be provided on a surface of the separator. The inorganic coating layer may have a structure in which inorganic particles are combined with each other by a binder to form an interstitial volume between the particles.

The electrode assembly 12 may be a jelly-roll (winding type) electrode assembly in which positive electrodes and negative electrodes having long sheet shapes are wound with a separator therebetween, a stacked electrode assembly in which a plurality of positive electrodes and negative electrodes of a certain size are sequentially stacked with a separator therebetween, or a stack/folding type electrode assembly in which bi-cells or full cells are stacked as unit cells, each cell including a positive electrode, a negative electrode, and a separator located between the positive electrode and the negative electrode.

The case 13 may accommodate the electrode assembly 12 therein.

The case 13 may include a receiving portion 13a in which the electrode assembly 12 is accommodated, and a sealing portion 13b for sealing the electrode assembly 12. The sealing portion 13b may be fused along an outer circumferential surface of the receiving portion 13a, to seal the electrode assembly 12. The fusion may be thermal fusion or ultrasonic fusion, but is not limited as long as the sealing portion 13b may be fused.

In an embodiment of the present disclosure, the case 13 may be provided as a film having a multi-layer structure including an outer layer for blocking external impact, a metal barrier layer for blocking moisture, and a sealant layer for sealing the case 13.

The outer layer may include a polyester-based film such as polyethylene terephthalate (PET), polybutylene terephthalate, polyethylene naphthalate, polybutylene naphthalate, copolymer polyester, polycarbonate, or nylon, and may have a single or multi-layer structure.

The metal barrier layer may include aluminum or copper.

The sealant layer may include a sealant resin, and may have a single or multi-layer structure.

The sealant resin may include polypropylene (PP), acid modified polypropylene (PPa), random polypropylene, ethylene propylene copolymer or a combination thereof. The ethylene propylene copolymer may include, but is not limited to, ethylene propylene rubber or ethylene-propylene block copolymer.

In an embodiment of the present disclosure, the case 13 may be a pouch-type case.

In an embodiment of the present disclosure, when the case 13 is a pouch-type case, the case 13 may include an upper pouch and a lower pouch. When the case 13 includes an upper pouch and a lower pouch, the upper pouch and the lower pouch may be fused on the outer circumferential surface, to seal the battery.

The sealing portion 13b may be sealed on four sides or three sides at an edge of the case 13. The three-sided sealing structure is a structure in which the upper pouch and the lower pouch are formed on one pouch sheet, then a boundary surface of the upper pouch and the lower pouch is bent so that the receiving portions 13a formed on the upper pouch and the lower pouch overlap each other, and edges of the remaining three sides except for the bent portion are sealed. FIG. 5 may be a view illustrating the receiving portion 13a of the lower pouch before the upper pouch is covered.

The electrode lead 11 may be accommodated in the case 13 so that a part of the electrode lead 11 is exposed to the outside of the case 13. The electrode lead 11 is electrically connected to an electrode tab (not shown) included in the electrode assembly 12, and protrudes via the sealing portion 13b to the outside of the case 13. A lead film 14a prevents electrical contact between the case 13 and the electrode lead 11 to insulate the case 13 from the electrode lead 11. Referring to FIG. 5, the secondary battery 10 according to an embodiment of the present disclosure includes the lead film 14a. The lead film 14a includes a fire extinguishing agent therein.

Referring to FIG. 5, the lead film 14a surrounds a part of an outer surface of the electrode lead 11, and is located between the electrode lead 11 and the case 13. For example, the lead film 14a may be located between the electrode lead 11 and the sealing portion 13b of the case 13 via which the electrode lead 11 protrudes. Accordingly, the lead film 14a may prevent a short circuit from occurring in the electrode lead 11 during sealing, and may improve the sealing property of the electrode lead 11 and the sealing portion 13b.

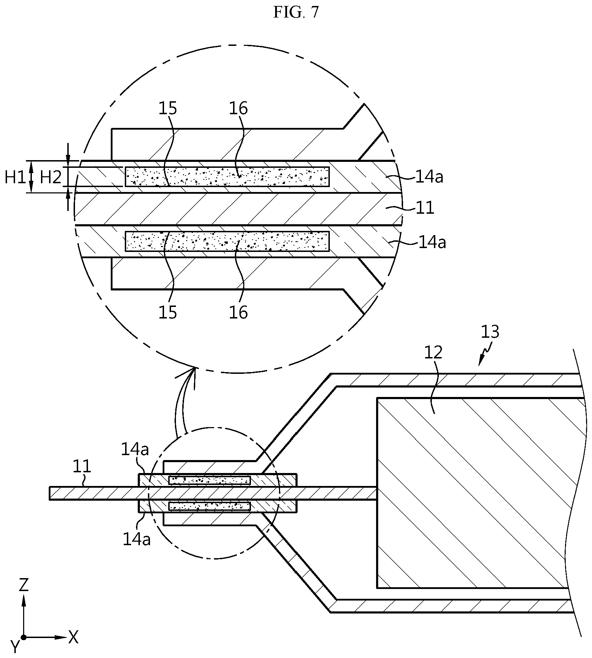

FIG. 7 is a cross-sectional view taken along line A-A' of FIG. 5, according to another embodiment of the present disclosure. Although the lead film 14a is provided on both surfaces of the electrode lead 11 in FIG. 7, the lead film 14a may be located on at least one surface of the electrode lead 11. For example, as shown in FIG. 6, the lead film 14a according to the present disclosure may be provided on one surface of the electrode lead 11, and another lead film 14a' may be provided on the other surface of the electrode lead 11. The lead film 14a may be located over the electrode lead 11, and the other lead film 14a' or the lead film 14a may be located under the electrode lead 11. In this case, the electrode lead 11 may be sealed along with the sealing portion 13b while being located between the lead film 14a and the other lead film 14a' or between two lead films 14a, so that lead films around the electrode lead 11 are connected to each other. Accordingly, the lead films 14a, 14a' may prevent a side surface of the electrode lead 11 from being exposed to the outside, and may improve the sealing property of the sealing portion 13b and the electrode lead 11.

In an embodiment of the present disclosure, the length L1 of the lead film 14a may be greater than a width LW of the electrode lead 11. A length of the lead film refers to a maximum value of a distance between one end and the other end of a lead film in a direction (Y axis direction) orthogonal to a protrusion direction (X axis direction) in which the electrode lead 11 protrudes. In other words, the length refers to a width of the lead film in a width direction (Y axis direction) of the electrode lead 11. Because the length L1 of the lead film 14a is greater than the width LW of the electrode lead 11, the lead film 14a may further extend from a side surface of the electrode lead 11, and thus, the side surface of the electrode lead 11 may be prevented from being exposed to the outside and the sealing property of the sealing portion 13b and the electrode lead 11 may be improved.

In an embodiment of the present disclosure, the width W1 of the lead film 14a may be greater than a width SW of the sealing portion 13b, and may be less than a length LL of the electrode lead 11. A width of the lead film 14a refers to a maximum value of a distance between one end and the other end of the lead film 14a in the protrusion direction of the electrode lead 11. In other words, the width refers to a width of the lead film in a direction orthogonal to the width direction of the electrode lead 11. A width of the sealing portion 13b refers to a maximum value of a distance between one end and the other end of the sealing portion 13b in the protrusion direction of the electrode lead 11. A length of the electrode lead 11 refers to a maximum value of a distance between one end and the other end of the electrode lead 11 in the protrusion direction of the electrode lead 11.

Because the width W1 of the lead film 14a is greater than the width SW of the sealing portion 13b, the lead film 14a may protrude to the outside of the case 13, and thus, a portion of the electrode lead 11 protruding to the outside of the case 13 may be further protected, thereby improving sealing property. The width W1 of the lead film 14a should be less than the length LL of the electrode lead 11 so that a portion of the electrode lead 11 not covered by the lead film 14a is used for electrical connection.

In another embodiment of the present disclosure, an entire width of the lead film 14a may be less than a width of the sealing portion 13b, and may be less than a length of the electrode lead 11. In this case, the lead film 14a may not protrude to the outside of the case 13.

In an embodiment of the present disclosure, an entire area of the lead film 14a may correspond to the sealing portion 13b.

In another embodiment of the present disclosure, only a portion of the lead film 14a may correspond to the sealing portion 13b.

Referring to FIG. 6, the lead film 14a may include an inner space 15, and may include a fire extinguishing agent 16 in the inner space 15.

Although the lead film 14a including the inner space 15 is located on one surface of the electrode lead 11 in FIG. 6, the lead film 14a including the inner space 15 may be located on both surfaces of the electrode lead 11 as shown in FIG. 7. In an embodiment of the present disclosure, the inner space 15 may be enclosed in the lead film 14a. This structure has been described with reference to FIGS. 1 and 2. When the inner space 15 is enclosed in the lead film 14a, the fire extinguishing agent 16 may not be exposed to an electrolyte, and the airtightness and durability of the battery may be easily ensured. Also, a position of the inner space 15 may be freely selected.

Assuming that the inner space 15 is enclosed in the lead film 14a, when the lead film 14a melts due to an abnormal operation of the battery or the like, the fire extinguishing agent 16 may be ejected from the lead film 14a.

In an embodiment of the present disclosure, although the inner space 15 may have a rectangular shape as shown in FIGS. 6 and 7, the inner space 15 is not limited thereto as long as it may include the fire extinguishing agent 16.

For example, the thickness H1 of the lead film 14a may be 0.2 mm, and the inner space 15 may have the thickness H2 of 0.15 mm. Also, the inner space 15 may be located at a distance P from an edge in a longitudinal direction of the lead film 14a. For example, the distance P may be 2 mm. Also, when the inner space 15 is located on the electrode lead 11, the inner space 15 may be located at a distance P' from an edge in a longitudinal direction of the electrode lead 11. For example, the distance P' may be 2 mm.

The durability and airtightness of the lead film 14a may be controlled by adjusting a position of the inner space 15. Because a lead film for a secondary battery seals an electrode lead and a case, sufficient mechanical rigidity should be ensured. Although the lead film 14a includes the fire extinguishing agent 16 in the lead film 14a, sufficient pressure resistance which is similar to that in a conventional lead film may be obtained by using a method of adjusting a position of the inner space 15 as described above. Accordingly, even when the fire extinguishing agent is included, the sealing property of the battery may be maintained.

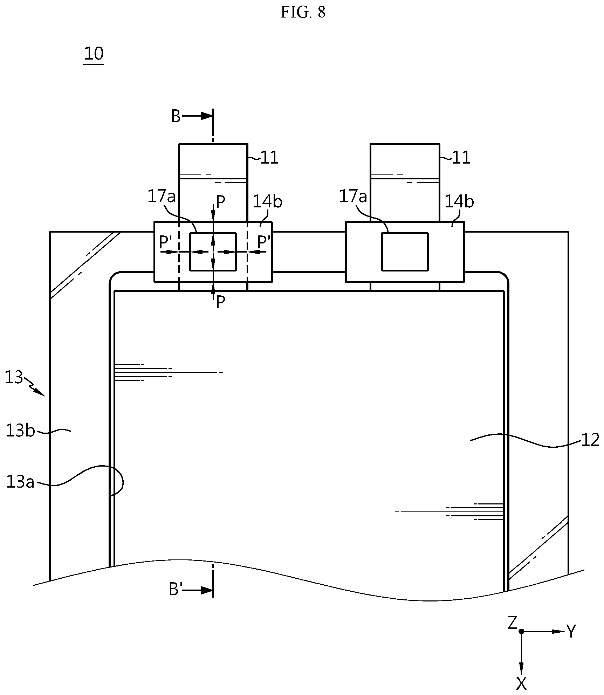

FIG. 8 is a view illustrating a secondary battery, according to another embodiment of the present disclosure.

The secondary battery 10 according to another embodiment of the present disclosure includes the electrode assembly 12 to which the electrode lead 11 is attached, the case 13, and a lead film 14b. The electrode lead 11, the electrode assembly 12, and the case 13 have been described above.

Referring to FIG. 8, the lead film 14b surrounds a part of an outer surface of the electrode lead 11, and is located between the electrode lead 11 and the case 13. For example, the lead film 14b may be located between the electrode lead 11 and the sealing portion 13b of the case 13 via which the electrode lead 11 protrudes.

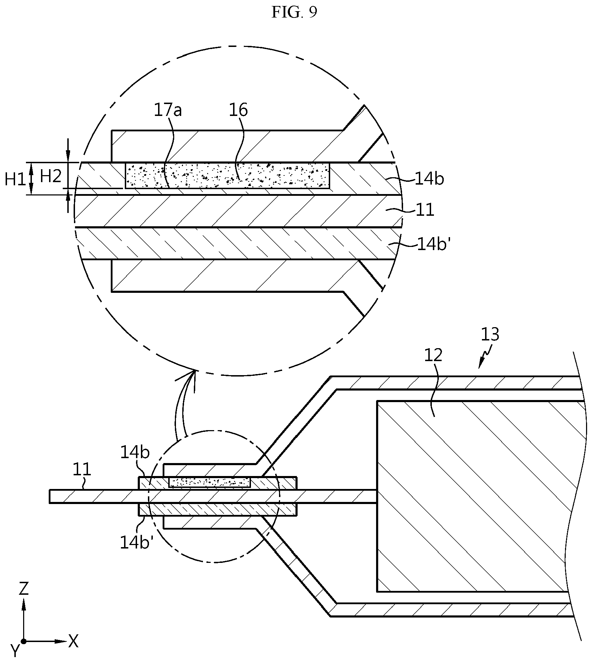

FIG. 9 is a cross-sectional view taken along line B-B' of FIG. 8.

Referring to FIG. 9, the lead firm 14b may include a recess portion 17a that is recessed inward, and the recess portion 17a may include the fire extinguishing agent 16.

Referring to FIG. 9, the recess portion 17a may be recessed in a direction (-Z axis direction) from the lead film 14b toward the electrode lead 11 located under the lead film 14b.

In an embodiment of the present disclosure, the recess portion 17a may be open in a direction (Z axis direction) from the lead film 14b toward the sealing portion 13b. That is, the recess portion 17a may be exposed toward a surface of the lead film 14b.

In general, an adhesive force of an interface between a lead film surrounding an electrode lead and a case is weak. Accordingly, when an abnormal operation of a battery occurs, venting occurs at the interface between the lead film and the case.

When the recess portion 17a is exposed toward the sealing portion 13b, because venting occurs at an interface between the sealing portion 13b of the case 13 and the surface of the lead film 14b toward which the recess portion 17a is open, and the fire extinguishing agent 16 sealed by the sealing portion 13b is ejected due to the venting at the interface between the sealing portion 13b of the case 13 and the surface of the lead film 14b toward which the recess portion 17a is open, the fire extinguishing agent may quickly operate.

Although the lead film 14b including the recess portion 17a is located on one surface of the electrode lad 11 and another lead film 14b' is provided on the other surface of the electrode lead 11 in FIG. 9, the lead film 14b including the recess portion 17a may be located on both surfaces of the electrode lead 11.

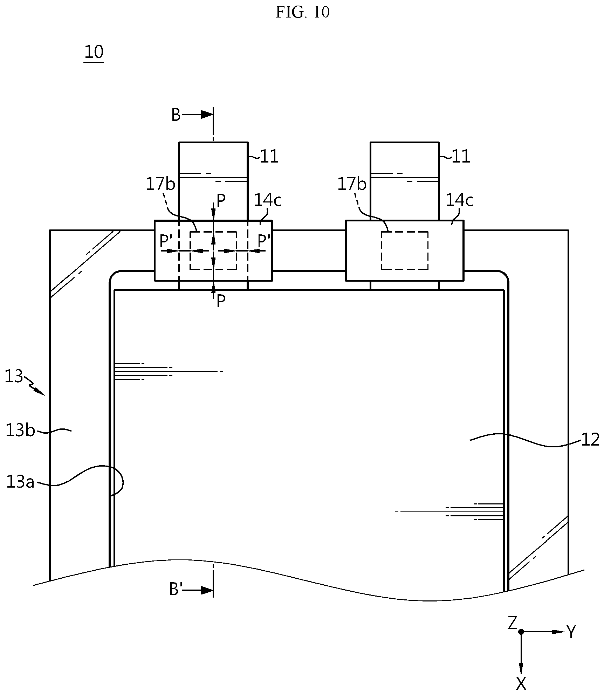

FIG. 10 is a view illustrating a secondary battery, according to another embodiment of the present disclosure. The secondary battery 10 according to another embodiment of the present disclosure includes the electrode assembly 12 to which the electrode lead 11 is attached, the case 13, and a lead film 14c. The electrode lead 11, the electrode assembly 12, and the case 13 have been described above.

Referring to FIG. 10, the lead film 14c surrounds a part of an outer surface of the electrode lead 11, and is located between the electrode lead 11 and the case 13. For example, the lead film 14c may be located between the electrode lead 11 and the sealing portion 13b of the case 13 via which the electrode lead 11 protrudes.

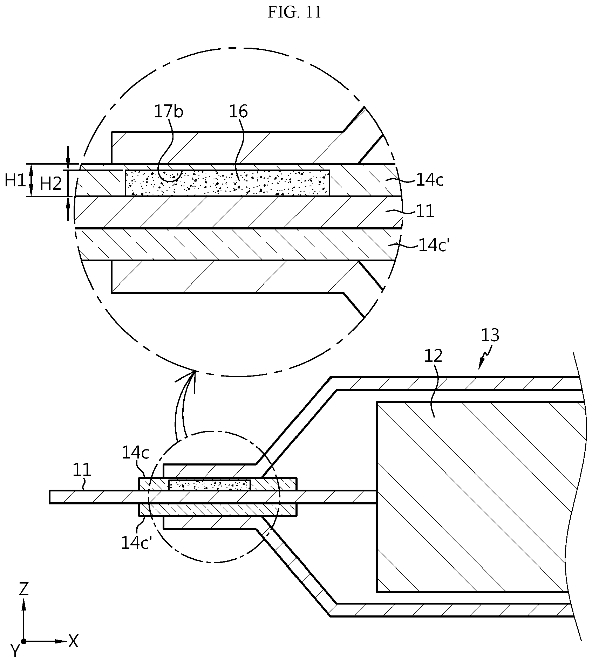

FIG. 11 is a cross-sectional view taken along line C-C' of FIG. 10.

Referring to FIG. 11, the lead film 14c may include a recess portion 17b that is recessed inward (Z axis direction), and the recess portion 17b may include the fire extinguishing agent 16.

Referring to FIG. 11, the recess portion 17b may be recessed in a direction from the lead film 14c toward the sealing portion 13b.

In an embodiment of the present disclosure, the recess portion 17b may be open in a direction (-Z axis direction) from the lead film 14c toward the electrode lead 11.

In general, when thermal runaway occurs, an electrode lead portion has a very large amount of heat. Also, an adhesive force at an interface between an electrode lead and a lead film is weak. Accordingly, when an abnormal operation of a battery occurs, venting occurs at the interface between the electrode lead and the lead film. That is, the electrode lead and the lead film are separated from each other. Accordingly, when an abnormal operation of the battery occurs, venting occurs at the interface between the electrode lead and the lead film.

When the recess portion 17b is exposed toward the electrode lead 11, because venting occurs at an interface between the electrode lead 11 and the lead film 14c, and the fire extinguishing agent 16 sealed by the electrode lead 11 is ejected due to the venting at the interface between the electrode lead 11 and the lead film 14c, the fire extinguishing agent may quickly operate. In addition, because the recess portion 17b faces the electrode lead 11, the fire extinguishing agent may be applied to an electrode lead portion having a very large amount of heat, thereby helping to minimize fire damage when the battery is overheated.

Although the lead film 14c including the recess portion 17b is located on one surface of the electrode lead 11 and another lead film 14c' is located on the other surface of the electrode lead 11 in FIG. 11, the lead film 14c including the recess portion 17b may be located on both surfaces of the electrode lead 11.

In an embodiment of the present disclosure, although the recess portions 17a, 17b may each have a rectangular shape as shown in FIGS. 8 to 11, the recess portions 17a, 17b are not limited thereto as long as they may include the fire extinguishing agent 16.

For example, the thickness H1 of any of the lead films 14b, 14c may be 0.2 mm, and any of the recess portions 17a, 17b may have the thickness H2 of 0.15 mm. Also, any of the recess portions 17a, 17b may be located at the distance P of 2 mm from an edge in a longitudinal direction of any of the lead films 14b, 14c. Also, when any of the recess portions 17a, 17b is located on the electrode lead 11, any of the recess portions 17a, 17b may be located at the distance P' of 2 mm from an edge in a longitudinal direction of the electrode lead 11.

The durability and airtightness of any of the lead films 14b, 14c may be controlled by adjusting a position of any of the recess portions 17a, 17b. Because a lead film for a secondary battery seals an electrode lead and a case, sufficient mechanical rigidity should be ensured. Although any of the lead films 14b, 14c includes the fire extinguishing agent 16 therein, sufficient pressure resistance which is similar to that of a conventional lead film may be obtained by adjusting a position of any of the recess portions 17a, 17b. Accordingly, even when the fire extinguishing agent is included, the sealing property of the battery may be maintained.

Although any of the lead films 14a, 14b, 14c includes the fire extinguishing agent 16 therein, the thickness H1 of any of the lead films 14a, 14b, 14c is constant in the longitudinal direction thereof. The inner space 15 or any of the recess portions 17a, 17b may be formed by removing a portion of any of the lead films 14a, 14b, 14c in the thickness direction. Even in this case, it is necessary to check whether there is sufficient mechanical rigidity. An internal pressure simulation under the conditions of the thicknesses H1, H2 and the distances P, P' was performed.

Assuming that gas was generated in a pouch-type case and internal pressure of 0.1 MPa was applied from the inside of the case to an electrode lead, the amount of deformation of an entire surface (the electrode lead, a lead film, and the case) was analyzed. In this case, the bottom of the case was fixed. In a comparative example where a fire extinguishing agent was not included, a maximum displacement from an inner end in a width direction of a sealing portion to the electrode lead was 0.05063 mm, and in the present disclosure, a maximum displacement was 0.05766 mm. As in a simulation result, it is found that although a maximum displacement increased when the fire extinguishing agent was included, a difference in the amount of deformation even at a pressure of 0.1 MPa was negligible. Accordingly, in the present disclosure, sufficient pressure resistance which is similar to that of a conventional lead film was obtained.

A simulation was also performed on maximum stress at the lead film when the internal pressure was applied as described above. In the comparative example in which the fire extinguishing agent was not included, maximum stress was 0.01603 MPa, and in the present disclosure, maximum stress was 0.01611 MPa, which did not reach plastic deformation and was not very different.

As such, it is found that although a fire extinguishing agent is included in a lead film, as proposed in the present disclosure, the sealing property of a battery may be maintained, and a safety device may be implemented according to an operation of the fire extinguishing agent.

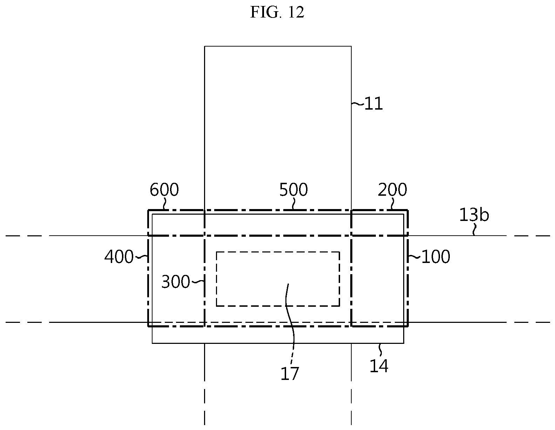

FIG. 12 is an enlarged view illustrating an electrode lead and a lead film in a secondary battery, according to an embodiment of the present disclosure.

Referring to FIG. 12, a lead film 14 may include a first portion 100 corresponding to the sealing portion 13b and a second portion 200 not corresponding to the sealing portion 13b.

Referring to FIG. 12, a fire extinguishing agent may be included in the first portion 100. When the fire extinguishing agent is included in the first portion 100, the fire extinguishing agent may not be exposed to an electrolyte during a normal operation of a battery, and then, the fire extinguishing agent may be ejected from the lead film 14 when the battery abnormally operates and venting occurs at an interface between the sealing portion 13b and the lead film 14. In particular, when the lead film 14 includes a recess portion 17, in order to prevent the fire extinguishing agent from being exposed to the electrolyte during the normal operation of the battery, the recess portion 17 may be formed in the first portion 100.

In another embodiment of the present disclosure, the fire extinguishing agent may be included in the second portion 200. When the fire extinguishing agent is included in the second portion 200, the fire extinguishing agent may not be exposed to the electrolyte during the normal operation of the battery, and then the fire extinguishing agent may be ejected from the lead film 14 when the battery abnormally operates and the lead film 14 melts. In particular, when the lead film 14 includes an inner space, because the fire extinguishing agent is not exposed to the electrolyte even when being sealed by the sealing portion 13b, the fire extinguishing agent may be included in the second portion 200.

Referring to FIG. 12, the lead film 14 may include the first portion 100 corresponding to the sealing portion 13b and the second portion 200 not corresponding to the sealing portion 13b, and the first portion 100 may include a third portion 300 corresponding to the electrode lead 11 and a fourth portion 400 not corresponding to the electrode lead 11.

In another embodiment of the present disclosure, the lead film 14 may include the first portion 100 corresponding to the sealing portion 13b and the second portion 200 not corresponding to the sealing portion 13b, and the second portion 200 may include a fifth portion 500 corresponding to the electrode lead 11 and a sixth portion 600 not corresponding to the electrode lead 11.

In an embodiment of the present disclosure, the fire extinguishing agent may be included in the third portion 300. When the fire extinguishing agent is included in the third portion 300, because the fire extinguishing agent may be located on the electrode lead 11 with a large amount of heat, the fire extinguishing agent may quickly operate when a temperature of the battery rises.

In another embodiment of the present disclosure, the fire extinguishing agent may be included in the fourth portion 400. When the fire extinguishing agent is included in the fourth portion 400, the fire extinguishing agent may quickly operate when the lead film 14 and the sealing portion 13b are separated from each other.

In another embodiment of the present disclosure, the first extinguishing agent may be included in the fifth portion 500 or the sixth portion 600.

In an embodiment of the present disclosure, the secondary battery may be a cylindrical, prismatic, or pouch-type secondary battery. Among them, the secondary battery may be a pouch-type secondary battery. A pouch-type secondary battery may easily increase a floor area ratio, but has a disadvantage in that a pouch itself is difficult to hold a cell. When a temperature of a cell rises to have thermal runaway, unlike a cylindrical battery including a PTC or CID, a pouch-type secondary battery has no thermal stability. According to the present disclosure, because a lead film is improved, a safety device is provided even in a pouch-type secondary battery.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### [Description of Reference Numerals]

1a, 1b: lead film
2: inner space
3a. 3b: fire extinguishing agent
4: recess portion
10: secondary battery
11: electrode lead
12: electrode assembly
13: case
13a: receiving portion
13b: sealing portion
14, 14a, 14b, 14c: lead film
15: inner space
16: fire extinguishing agent
17, 17a, 17b: recess portion
100: first portion
200: second portion
300: third portion
400: fourth portion
500: fifth portion
600: sixth portion

## Claims

1. A lead film for a secondary battery, comprising a fire extinguishing agent.

2. The lead film for a secondary battery according to claim 1, comprising an inner space,
wherein the fire extinguishing agent is included in the inner space.

3. The lead film for a secondary battery according to claim 2, wherein the inner space is enclosed in the lead film.

4. The lead film for a secondary battery according to claim 1, wherein a recess portion that is recessed inward is formed in the lead film, and
wherein the fire extinguishing agent is provided in the recess portion.

5. The lead film for a secondary battery according to claim 4, wherein the recess portion is exposed toward a surface of the lead film.

6. The lead film for a secondary battery according to claim 1, wherein, except for a portion comprising the fire extinguishing agent, continuity of the lead film is maintained in a longitudinal direction, a width direction, and a thickness direction.

7. The lead film for a secondary battery according to claim 1, wherein the fire extinguishing agent is solid, liquid, or gaseous.

8. The lead film for a secondary battery according to claim 1, wherein the fire extinguishing agent comprises carbonate, hydrogen carbonate, protein foam, fluoroprotein foam, alcohol resistant foam, aqueous film forming foam, synthetic surfactant foam, urea, halogen compound, phosphate compound, phosphazene compound, silicate, ammonium salt, ethyl methyl imidazole, fluoroethers, fluoroketones, fluorocarbons or a combination thereof.

9. A secondary battery comprising:
an electrode assembly to which an electrode lead is attached;
a case in which the electrode assembly is accommodated;
a sealing portion configured to seal the electrode assembly in the case; and
a lead film surrounding a part of an outer surface of the electrode lead and located between the electrode lead and the sealing portion of the case,
wherein the lead film comprises a fire extinguishing agent.

10. The secondary battery according to claim 9, wherein the lead film comprises an inner space,
wherein the fire extinguishing agent is included in the inner space.

11. The secondary battery according to claim 10, wherein the inner space is enclosed in the lead film.

12. The secondary battery according to claim 10, wherein the inner space is located at a distance from an edge of the lead film and an edge of the electrode lead.

13. The secondary battery according to claim 9, wherein a recess portion that is recessed inward is formed in the lead film,
wherein the fire extinguishing agent is provided in the recess portion.

14. The secondary battery according to claim 13, wherein the recess portion is recessed toward the electrode lead.

15. The secondary battery according to claim 14, wherein the recess portion is exposed toward the sealing portion.

16. The secondary battery according to claim 13, wherein the recess portion is recessed toward the sealing portion.

17. The secondary battery according to claim 16, wherein the recess portion is exposed toward the electrode lead.

18. The secondary battery according to claim 13, wherein the recess portion is located at a distance from an edge of the lead film and an edge of the electrode lead.

19. The secondary battery according to claim 9, wherein the lead film comprises a first portion corresponding to the sealing portion and a second portion not corresponding to the sealing portion,
wherein the fire extinguishing agent is included in the first portion.

20. The secondary battery according to claim 19, wherein the first portion comprises a third portion corresponding to the electrode lead and a fourth portion not corresponding to the electrode lead,
wherein the fire extinguishing agent is included in the third portion.
